# EUROPEAN PATENT APPLICATION

(11) **EP 1 942 437 A1**
(43) Date of publication of application: **09.07.2008**
(21) Application number: 06822272.8
(22) Date of filing: 25.10.2006
(51) Int. Cl.: G06F 21/24, H04M 11/10, H04Q 7/38

(54) **DATA PROCESSING APPARATUS**

(30) Priority: 26.10.2005 JP 2005311781
(71) Applicant: MATSUSHITA ELECTRIC INDUSTRIAL CO., LTD., Osaka 571-8501 (JP)
(72) Inventor: TAKENO, Masanori c/o Matsushita El. Ind. Co. Ltd., 2-1-61, Shiromi, Chuo-ku, Osaka 540-6207 (JP)
(74) Representative: Grünecker, Kinkeldey, Stockmair & Schwanhäusser Anwaltssozietät
(86) International application number: PCT/JP2006/321295
(87) International publication number: WO 2007/049654

(57) **Abstract**

A data processing apparatus that allows even an application and a terminal, which do not know the unique ID used for an encryption, to delete contents stored in a memory card. In this apparatus, during a content writing process, a management information creating part (5) acquires, from a content received from an input processing part (3), a bind ID type (terminal ID or application ID) and properties (telephone number, data attribute, application information, etc.) and then creates, based on the acquired properties, management information. During a content deletion process, a content deleting part (8), when receiving a data deletion request signal, determines whether any ID is requested for the designated content to be deleted and then executes the content deletion process.

## Description

### Technical Field

The present invention relates to a data processing apparatus, and more particularly to a data processing apparatus that manages data stored in external memory.

### Background Art

Memory cards used in data processing apparatuses such as mobile phones, portable information terminal apparatuses, and personal digital electronics have become widespread. A technology has been proposed whereby, when content is stored in such a memory card, the content is encrypted using a terminal-specific ID (telephone number or the like) or application-specific ID, and only a terminal or application that knows that ID can use the content.

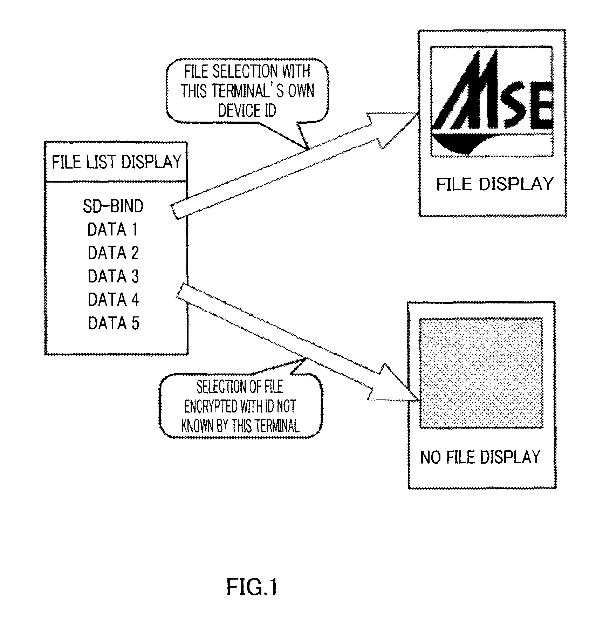

An example of the use of external memory that stores conventional encrypted content is described below with reference to FIG.1 through FIG.3.

FIG.1 is a drawing showing a case in which a plurality of image data files encrypted by means of a terminal-specific ID and stored in external memory are displayed by a terminal. In FIG.1, the titles and so forth of a plurality of image data files stored in external memory are displayed in list form on the terminal, and display is possible when a file encrypted with the device ID of the terminal is selected from among these, whereas display is not possible when a file encrypted with an ID unknown to the terminal is selected.

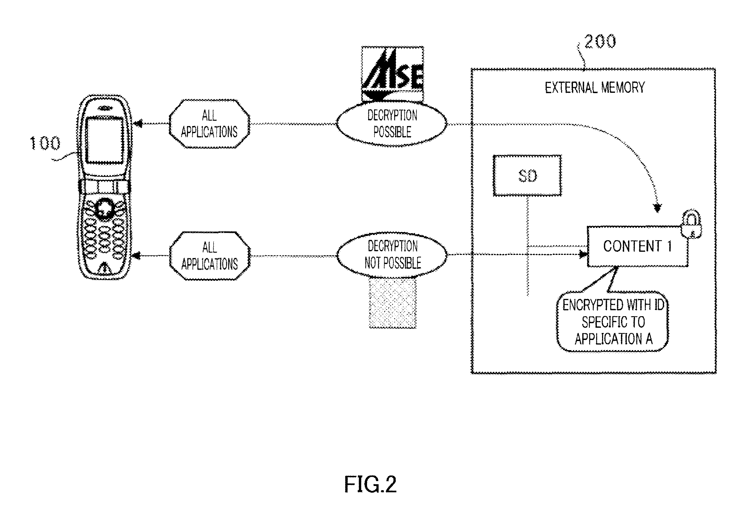

FIG.2 is a drawing showing an example of decryption of image data encrypted by means of an application program (hereinafter referred to as "application") specific ID and stored in external memory. In FIG.2, content 1 comprising image data encrypted using an ID specific to application A installed in a terminal 100 is stored in external memory 200, and decryption is possible when application A is executed by terminal 100, whereas decryption is not possible when application B is executed.

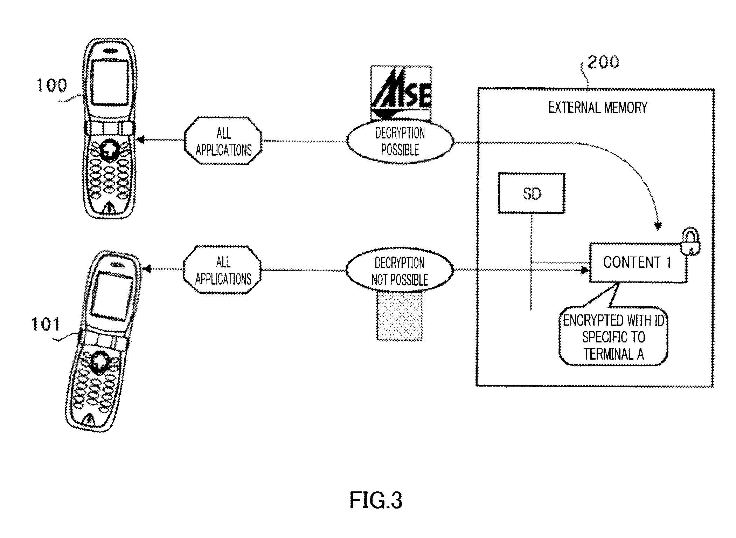

FIG.3 is a drawing showing an example of decryption by a plurality of terminals of image data encrypted by terminal 100 by means of a terminal-specific ID and stored in external memory 200. In FIG.3, when terminal A 100 stores content 1 comprising image data encrypted using a terminal-specific ID (such as a telephone number, for example) in external memory 200, decryption is possible by terminal A 100, whereas decryption is not possible by terminal B 101 having a different terminal-specific ID.

By storing encrypted content in external memory as described above, it is possible to restrict playback by a terminal or application that does not have the same ID.

Other conventional technologies are, for example, a digital intellectual property protection system described in Patent Document 1, and a mobile phone described in Patent Document 2.

In the digital intellectual property protection system of Patent Document 1, by encrypting content using device-specific information and storing that content in a transportable recording medium apparatus, a device that does not have the device-specific information can be prevented from performing content decryption correctly.

With the mobile phone of Patent Document 2, when data is recorded in an external storage medium, a number identifier for identifying the mobile phone's own telephone number is recorded together with, and associated with, the data, and before data is read from the external recording medium, it is determined whether the number identifier recorded in association with the data corresponds to the mobile phone's own telephone number, and if it does not, reading of the data is inhibited.
Patent Document 1:Unexamined Japanese Patent Publication No.2003-131950
Patent Document 2: Japanese Patent Publication No. 3416621

### Disclosure of Invention

### Problems to be Solved by the Invention

However, in the example of use shown in above-mentioned FIG.2, when application A is deleted from the terminal, or the external memory is used by a terminal in which application A is not installed, content encrypted and stored using an application-A-specific ID does not have its file attribute displayed, the file contents are unknown, and the purpose of use cannot be determined, and therefore the content remains in the external memory as a file for which it cannot be determined whether deletion may be performed.

Also, in the example of use shown in above-mentioned FIG.3, when external memory used by terminal A is used by terminal B due to a terminal model update or the like, content encrypted and stored using a terminal-A-specific ID does not have its file attribute displayed, the file contents are unknown, and the purpose of use cannot be determined, and therefore the content remains in the external memory as a file for which it cannot be determined whether deletion may be performed.

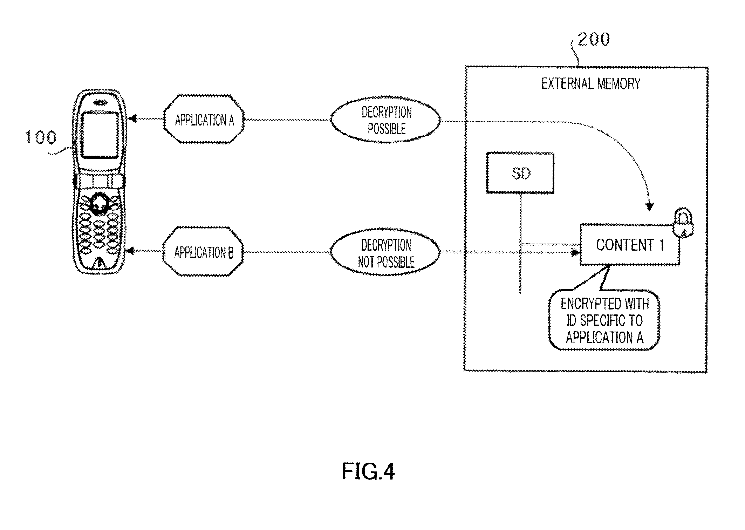

That is to say, as shown in FIG.4, content 1 stored in external memory 200 by application A in terminal A 100 can only be accessed by application A, and access to content 1 cannot be performed by application B, and therefore its contents cannot be referenced and deletion cannot be performed, with the result that unknown content remains in the external memory and the usable area in the external memory is reduced by unusable content.

Furthermore, with the digital intellectual property protection system of above Patent Document 1 and the mobile phone of above Patent Document 2, a terminal that does not know terminal-specific information cannot decrypt data correctly, or decryption by such a terminal is inhibited, with the result that there is a possibility of not even being able to determine whether content may be deleted.

It is an obj ect of the present invention to provide a data processing apparatus that allows even an application and a terminal that do not know a unique ID used for encryption to delete content stored in a memory card.

### Means for Solving the Problems

A data processing apparatus of the present invention performs data write processing and deletion processing for a removable storage medium, and employs a configuration that includes: a management information creating section that creates management information including storage medium data storage directory information and ID information necessary for data during data write processing; a data writing section that stores the management information and the data in the data storage directory in the storage medium during the data write processing; and a data deleting section that determines the necessity of ID information corresponding to data to be deleted and deletes data stored in the storage medium, and also deletes the corresponding management information during the data deletion processing.

### Advantageous Effect of the Invention

The present invention allows even an application and a terminal that do not know a unique ID used for encryption to delete data (content) stored in a storage medium.

### Brief Description of Drawings

FIG. 1 is a drawing showing a case in which a plurality of image data files encrypted by means of a conventional terminal-specific ID and stored in external memory are displayed by a terminal;
FIG.2 is a drawing showing an example of decryption of image data encrypted by means of a conventional application-program-specific ID and stored in external memory;
FIG.3 is a drawing showing an example of decryption by a plurality of terminals of image data encrypted by a conventional terminal by means of a terminal-specific ID and stored in external memory;
FIG.4 is a drawing showing an example in which content contents cannot be referenced and deletion cannot be performed in a conventional terminal;
FIG.5 is a block diagram showing the principal-part configuration of a data processing apparatus according to an embodiment of the present invention;
FIG. 6 is a drawing showing an example of a management file according to this embodiment;
FIG.7 is a drawing showing another example of a management file according to this embodiment;
FTG.8 is a flowchart showing content read processing according to this embodiment;
FIG.9 is a flowchart showing content write processing according to this embodiment;
FIG. 10 is a flowchart showing management information creation, write, and deletion processing according to this embodiment;
FIG.11 is a drawing showing an actual example of the procedure and management information during management information writing according to this embodiment;
FIG.12 is a flowchart showing content deletion processing according to this embodiment;
FIG.13 is a drawing showing an actual example of management information initialization according to this embodiment;
FIG.14 is a flowchart showing terminal authentication processing according to this embodiment;
FIG.15 is a drawing showing an example in which content stored in a directory under a device bind directory according to this embodiment is managed associated with a terminal ID;
FIG.16 is a drawing showing an example in which content stored in a directory under a device bind directory according to this embodiment is managed associated with an application ID;
FIG.17 is a drawing showing an example of a terminal A equipped with an ID management function according to this embodiment; and
FIG.18 is a drawing showing an example in which the ID management function of terminal A according to this embodiment is transferred to another terminal B using the terminal authentication function.

### Best Mode for Carrying Out the Invention

An embodiment of the present invention will now be described in detail with reference to the accompanying drawings.

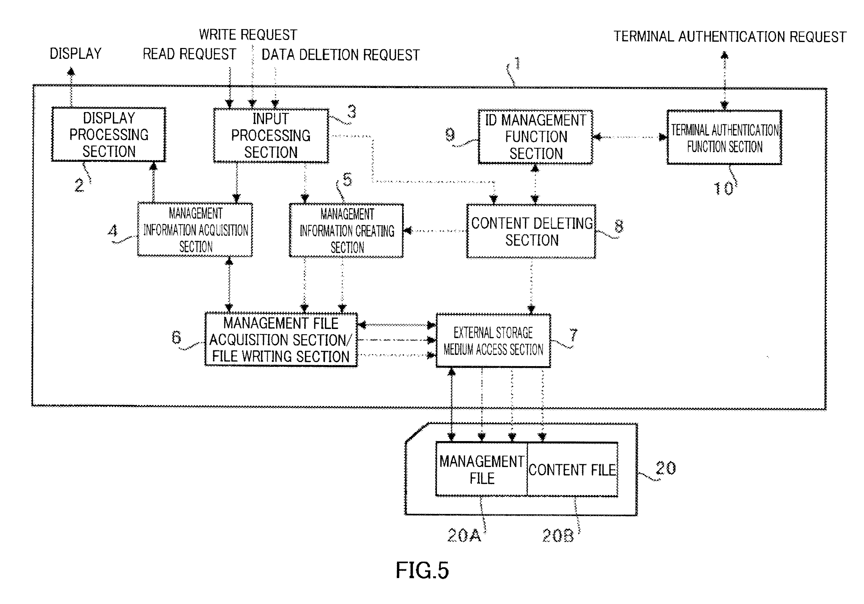

FIG.5 is a block diagram showing the principal-part configuration of a data processing apparatus of an embodiment to which the present invention is applied. In FIG.5, a data processing apparatus 1 is composed of a display processing section 2, an input processing section 3, a management information acquisition section 4, a management information creating section 5, a management file acquisition section/file writing section 6, an external storage medium access section 7, a content deleting section 8, an ID management function section 9, and a terminal authentication function section 10.

Display processing section 2 has a function of executing display processing whereby management information and so forth of content input from management information acquisition section 4 is output to and displayed by an external display device (not shown).

Input processing section 3 has a function of executing input processing whereby, when a content-related read request directive, write request directive, data deletion directive, or the like is input from an input section such as an external keyboard (not shown), a read request signal is output to management information acquisition section 4, a write request signal is output to external storage medium access section 7, and a data deletion request signal is output to content deleting section 8. When outputting a write request signal, input processing section 3 also outputs the input content to management information creating section 5.

Management information acquisition section 4 has a function of executing management information acquisition processing whereby, when a read request signal is input from input processing section 3 in content readprocessing, management information is acquired from a management file 20A in a memory card 20 that is an external storage medium via management file acquisition section/file writing section 6 and external storage medium access section 7, and is output to display processing section 2.

Management information creating section 5 has a function of executing management information creation processing whereby, when a write request signal is input together with content from input processing section 3 in content write processing, a bind ID type (terminal ID or application ID) and properties (telephone number, data attribute, application information, etc.) are acquired from the input content, management information is created based on those properties, and the content is output together with that management information to management file acquisition section/file writing section 6.

Management file acquisition section/file writing section 6 has a function of executing management file acquisition processing whereby, when a management information acquisition request signal is input from management information acquisition section 4 in content read processing, management information is acquired from management file 20A in memory card 20 via external storage medium access section 7, and is output to management information acquisition section 4.

Also, management file acquisition section/file writing section 6 has a function of executing file write processing whereby, when a management information write request together with management information and a content write request together with content are input frommanagement information creating section 5 in content write processing, management information is written to management file 20A in memory card 20, and content is written to a content file 20B, via external storage medium access section 7.

Furthermore, management file acquisition section/file writing section 6 has a function of executing content deletion processing whereby, when a content deletion request is input together with management information from management information creating section 5 in content deletion processing, content specified for deletion in content file 20B in memory card 20 is deleted via external storage medium access section 7, and corresponding management file 20A management information is initialized.

External storage medium access section 7 has a function of accessing management file 20A and content file 20B in memory card 20 according to a management information read request, content write request, and content deletion request input from management file acquisition section/file writing section 6, and executing management information reading and writing, and content writing and deletion.

Content deleting section 8 has a function of executing content deletion processing whereby, when a data deletion request signal is input from input processing section 3 in content deletion processing, the necessity or otherwise of an ID for the content specified for deletion is determined by ID management function section 9, and if an ID is determined to be necessary, a terminal ID or application ID is acquired from ID management function section 9, and is output together with a content deletion request to management information creating section 5.

ID management function section 9 has an ID management function that manages a terminal ID or application ID corresponding to content, and outputs a relevant terminal ID or application ID to content deleting section 8 according to a deletion content ID acquisition request input from content deleting section 8 in content deletion processing. Also, when an ID necessary for content to be deleted is a terminal ID, ID management function section 9 outputs a terminal authentication request together with the managed terminal ID to terminal authentication function section 10, and outputs the corresponding terminal ID to content deleting section 8 according to the terminal ID authentication result of another terminal input from terminal authentication function section 10.

Terminal authentication function section 10 has a function of executing terminal authentication processing whereby, when a terminal authentication request is input from ID management function section 9 in content deletion processing, a terminal ID is acquired from another terminal connected externally, the corresponding terminal ID is acquired from ID management function section 9, the terminal IDs are compared, and the authentication result is output to ID management function section 9.

Memory card 20 stores management file 20A and content file 20B. Management file 20A is a file that stores management information for managing content stored in content file 20B in directory units.

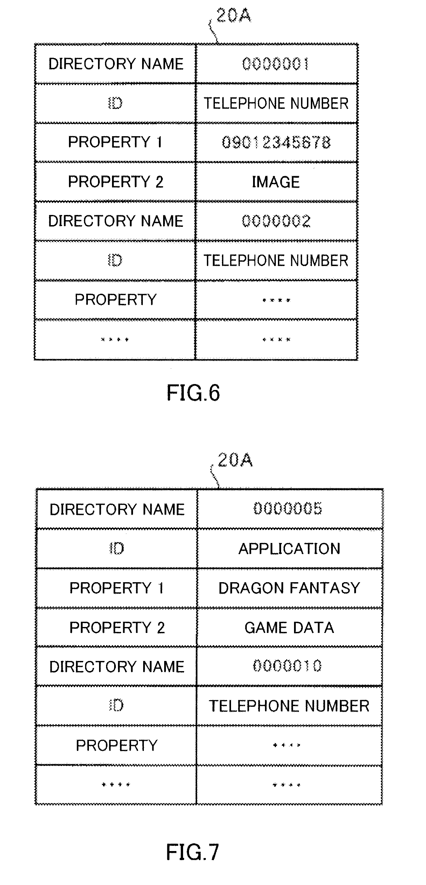

For example, "directory name", "ID (bind ID type)", "property 1 (telephone number)", and "property 2 (data attribute)" may be managed on a content-by-content basis as in the case of management file 20A shown in FIG.6. In this case, a characteristic is that management is performed through association of "telephone number" representing the terminal ID as the bind ID type of each directory storing content.

Also, for example, "directory name", "ID (bind ID type)", "property 1 (application name)", and "property 2 (data attribute)" may be managed on a content-by-content basis as in the case of management file 20A shown in FIG. 7. In this case, a characteristic is that management is performed through association of "application" representing the application ID as the bind ID type of each directory storing content.

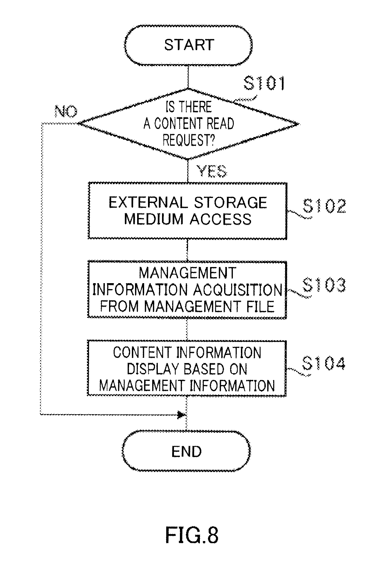

Content read processing executed in data processing apparatus 1 in FIG.5 will now be described with reference to the flowchart shown in FIG.8.

In FIG.8, management information creating section 5 determines whether or not there is input of a content read request signal from input processing section 3 (step S101), and if a content read request signal is input (step 5101: YES), outputs a content read request to management information acquisition section 4. If a content read request signal is not input (step S101: NO), input processing section 3 terminates this processing.

When a content read request is input, management information acquisition section 4 accesses memory card 20 via management file acquisition section/file writing section 6 and external storage medium access section 7 (step S102), acquires management information from management file 20A (see FIG.6 or FIG.7) (step S103), outputs display information such as an icon of content stored in content file 20B of memory card 20 based on that management information, displays content information on an external display section (step S104), and terminates this processing.

Thereafter, it is possible for a user to ascertain what content is stored in memory card 20 from the content information displayed on the display section, select content, and input a playback command, etc., from the input section.

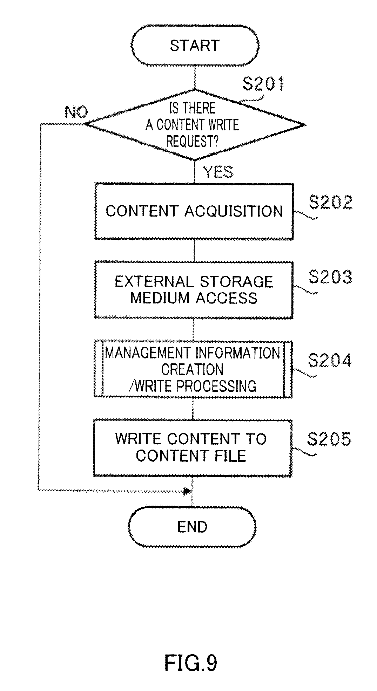

Next, content write processing executed in data processing apparatus 1 in FIG.5 will be described with reference to the flowchart shown in FIG.9.

In FIG.9, management information creating section 5 determines whether or not there is input of a content write request signal from input processing section 3 (step S201), and if a content write request signal is input (step S201: YES), acquires content input together with the content write request (step S202). Management information creating section 5 accesses memory card 20 via management file acquisition section/file writing section 6 and external storage medium access section 7 (step S203), and starts creation and write processing of management information corresponding to the acquired content (step S204).

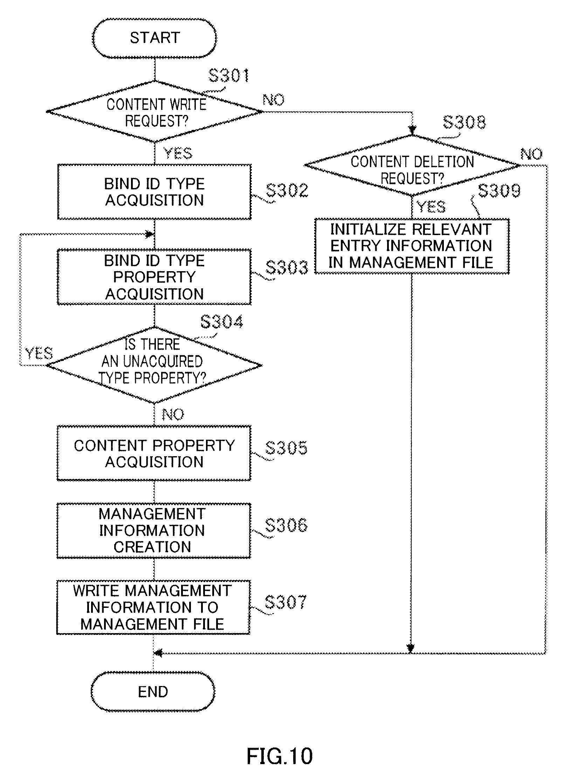

Management information creation and write processing executed by management information creating section 5 will now be described with reference to the flowchart shown in FIG.10.

In FIG.10, management information creating section 5 determines whether or not there is input of an above-described content write request signal (step S301), and when a content write request signal is input together with content (step S301: YES) and content is acquired, acquires a bind ID type (terminal ID or application ID) from that content (step S302), and acquires a property corresponding to that bind ID type from the content (step S303).

Next, management information creating section 5 references the acquired content and determines whether or not there is an unacquired bind ID type property (step S304), and if there is determined to be an unacquired bind ID type property (step S304: YES), returns to step S303 and again acquires a bind ID type property (telephone number or application name). By repeatedly executing step S303 and step S304, management information creating section 5 acquires all the bind ID type properties set in the acquired content.

Then management information creating section 5 references the acquired content, and on determining that there are no unacquired bind ID type properties (step S304: NO), acquires a content property (data property, etc.) set in the acquired content (step S305).

Next, management information creating section 5 creates management information based on the acquired bind ID type properties and content property (step S306), writes that management information to management file 20A in memory card 20 via management file acquisition section/file writing section 6 and external storage medium access section 7 (step S307), and terminates this processing. Also, if a content write request signal is not input (step S201: NO), management information creating section 5 terminates this processing.

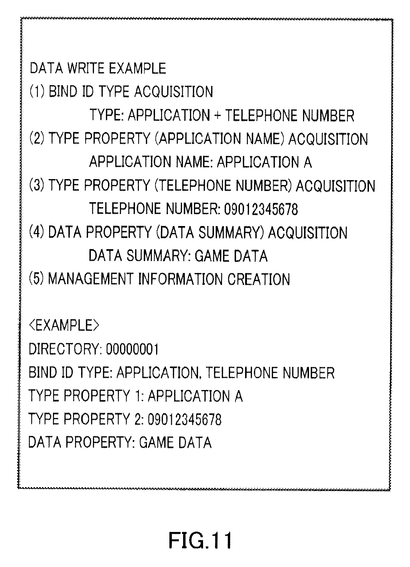

An actual example of management information written to management file 20A is shown in FIG.11. In this case, reference numbers (1) through (5) in the figure show the procedure for acquisition of bind ID type properties and a data property acquired from the content, and management information creation. In this case, "00000001", the name of the directory storing the content, is set, "application, telephone number" are acquired as bind ID type properties, application name "application A" is acquired as type property 1, telephone number "09012345678" is acquired as type property 2, and data property "game data" is acquired as a content property, and the management information indicated by <Example> in the figure is created and is written to management file 20A.

The processing in step S308 and step S309 in FIG.10 will be explained separately in a description of content deletion processing given later herein.

Returning to FIG.9, management information creating section 5 writes the acquired content to a directory having above-mentioned directory name "00000001" in content file 20B in memory card 20 via management file acquisition section/file writing section 6 and external storage medium access section 7 (step S205), and terminates this processing.

Also, if a content write request signal is not input in step S201 (step S201: NO), management information creating section 5 terminates this processing.

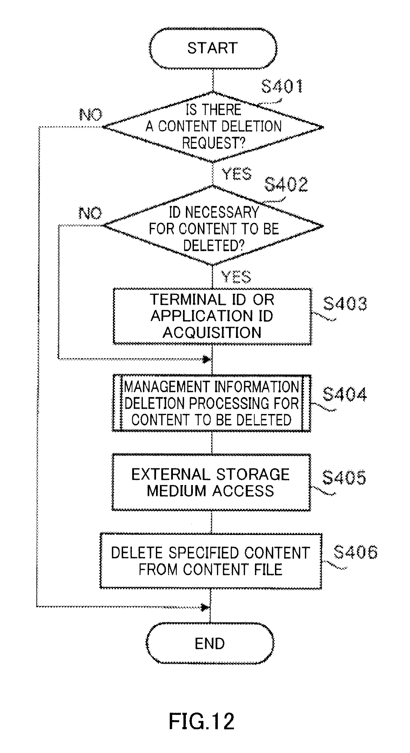

Next, content deletion processing executed by content deleting section 8 will be described with reference to the flowchart shown in FIG.12.

In FIG.12, content deleting section 8 determines whether or not there is input of a data deletion request signal from input processing section 3 (step S401), and if a data deletion request signal designating content to be deleted is input (step S401: YES), ID management function section 9 determines whether or not that content to be deleted requires an ID (step S402).

If an ID is determined to be necessary (step S402: YES), content deleting section 8 acquires a terminal ID or application ID corresponding to the content to be deleted from IDmanagement function section 9 (step S403) . If an ID is determined not to be necessary (step S402: NO), content deleting section 8 proceeds to step S404.

In step S404, content deleting section 8 outputs a content deletion request together with the acquired terminal ID or application ID to management information creating section 5. Management information creating section 5 executes content deletion processing based on the input content deletion request. This content deletion processing will now be described with reference to the flowchart shown in FIG.10.

In FIG.10, if a content write request signal is not input (step S3 01:NO), management information creating section 5 determines whether or not there is input of an above-described content deletion request from content deleting section 8 (step S308). If an above-described content deletion request is input from content deleting section 8 (step S308: YES), memory card 20 is accessed via management file acquisition section/file writing section 6 and external storage medium access section 7 based on the terminal ID or application ID together with the content deletion request, the relevant entry information (management information) in management file 20A is initialized (step S309), and this processing is terminated.

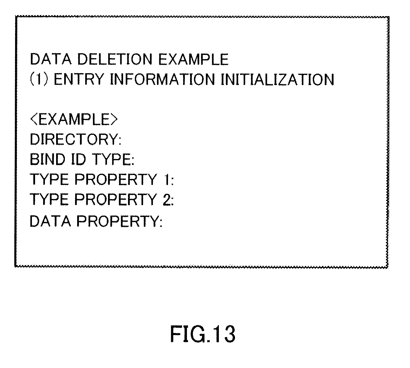

An actual example of management information initialization for management file 20A is shown in FIG.13. In this case, the management information shown in FIG.11 is initialized, indicating that the bind ID type property and content property contents have been deleted.

Returning to FIG.12, when the above-described management information deletion processing ends, management information creating section 5 accesses memory card 20 via management file acquisition section/file writing section 6 and external storage medium access section 7 (step S405), deletes the content specified by the above content deletion request from content file 20B (step S406), and terminates this processing. Also, if a data deletion request signal is not input (step S401: NO), content deleting section 8 terminates this processing.

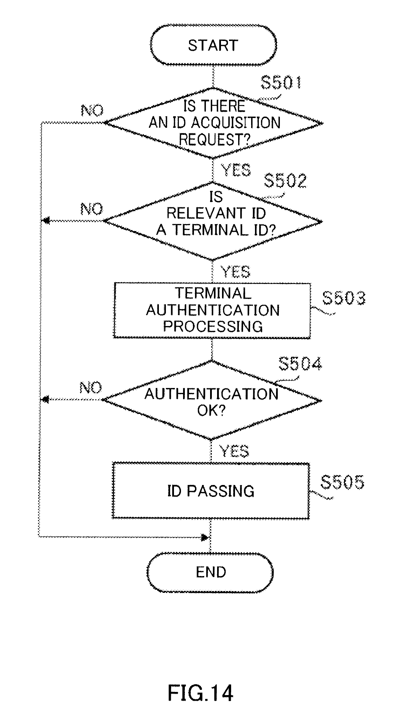

Next, a description will be given, with reference to the flowchart shown in FIG.14, of terminal authentication processing executed by ID management function section 9 when an ID is determined to be necessary for content to be deleted by content deleting section 8 in above-described content deletion processing.

In FIG.14, ID management function section 9 determines whether or not there is input of an ID acquisition request from content deleting section 8 (step S501), and if an ID acquisition request is input (step S501: YES), determines whether or not the relevant ID is a terminal ID (step S502). If the relevant ID is determined to be a terminal ID (step S502: YES), ID management function section 9 outputs a terminal authentication request together with that terminal ID to terminal authentication function section 10, and starts terminal authentication processing (step S503).

When the terminal ID and terminal authentication request are input, terminal authentication function section 10 transmits a terminal authentication request to another external terminal and acquires a terminal ID from that other terminal, compares this with the input terminal ID, and outputs the terminal authentication result to ID management function section 9.

Then, when the terminal authentication result is input, ID management function section 9 determines whether the authentication is OK (step S504), and if the authentication is OK (step S504: YES), passes the corresponding terminal ID to content deleting section 8 (step S505), and terminates this processing.

If an ID acquisition request is not input (step S501: NO), or if the relevant ID is not a terminal ID (step S502: NO), or if the terminal authentication result is NG (step S504: NO), ID management function section 9 terminates this processing without passing a terminal ID to content deleting section 8.

As described above, according to this embodiment, by creating a device bind directory for each content stored in memory card 20, creating management information including a bind ID type (terminal ID or application ID) and properties corresponding to the bind ID type, and storing this management information in a management file, it is possible to divide directories storing content by bind ID, and manage the relationship between a directory in which content is stored and ID information by means of management information.

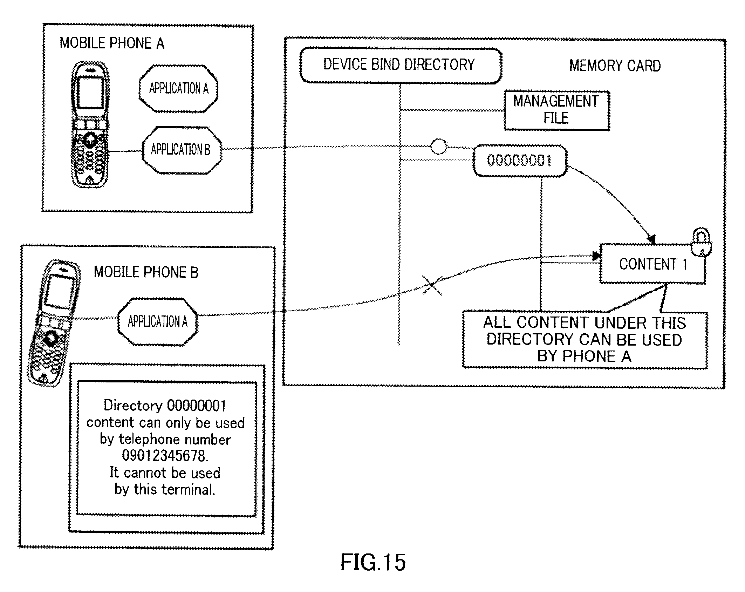

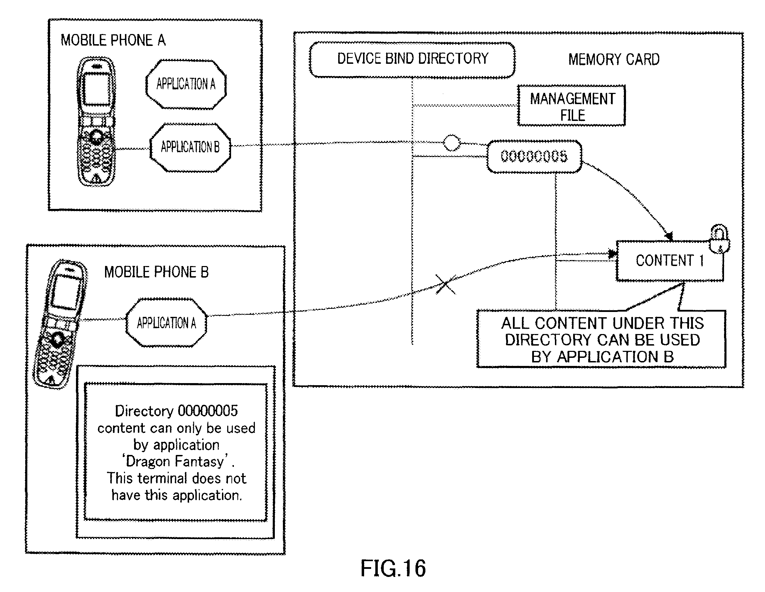

As a result, when the present invention is applied to a mobile phone, for example, as a device equipped with a memory card I/F allowing removable connection of memory card 20, the kind of operation shown in FIG.15 and FIG.16 is possible.

FIG.15 is a drawing showing an example in which content stored in a directory under a device bind directory is managed associated with a terminal ID. This drawing shows a case in which encrypted content 1 stored together with a management file containing a terminal ID (mobile phone number) in "directory 00000001" in a memory card by application B of mobile phone A is used by another mobile phone B.

In this case, when mobile phone B accesses the memory card, the following message is displayed in the display section: "Directory 00000001 content can only be used by telephone number '09012345678'. It cannot be used by this terminal." By means of this display, the user of mobile phone B can recognize the fact that encrypted content 1 has been encrypted by another mobile phone and cannot be used by that user' s terminal, and only deletion of that encrypted content 1 is possible by means of the above-described content deletion function.

FIG.16 is a drawing showing an example in which content stored in a directory under a device bind directory is managed associated with an application ID. This drawing shows a case in which encrypted content 1 stored together with a management file containing an application ID (application name) in "directory 00000005" in a memory card by application B of mobile phone A is used by another mobile phone B.

In this case, when mobile phone B accesses the memory card, the following message is displayed in the display section: "Directory 00000005 content can only be used by application 'Dragon Fantasy' . This terminal does not have this application." By means of this display, the user of mobile phone B can recognize the fact that encrypted content 1 cannot be used by application A of that user' s terminal, and only deletion of that encrypted content 1 is possible by means of the above-described content deletion function.

Therefore, if another terminal attempts to use encrypted content stored in a memory card by a particular terminal, the other terminal not having a terminal ID or application ID corresponding to the encrypted content can recognize the fact by referencing a management file managing the content type of that content, and can delete that content from the memory card. As a result, a situation in which the contents of content cannot be referenced and cannot even be deleted can be avoided, and the memory area of a memory card can be used efficiently.

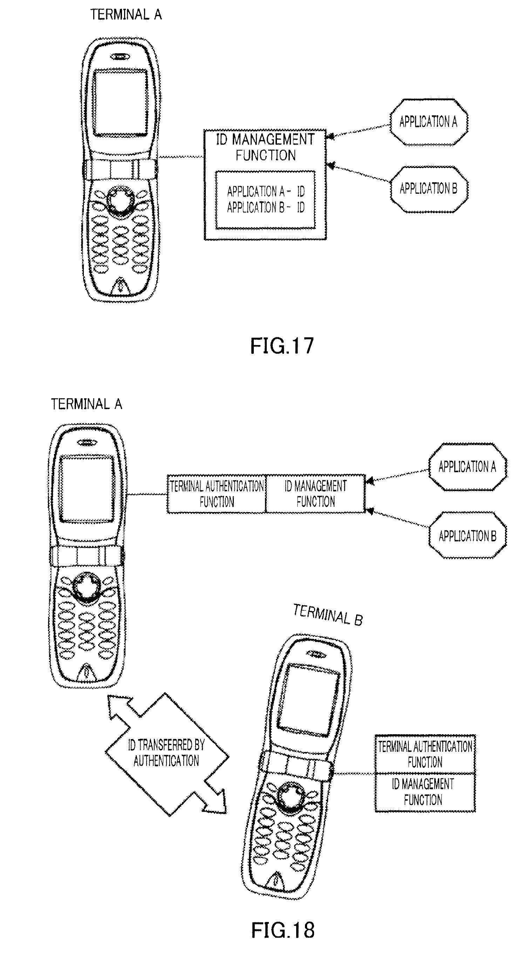

In the above embodiment, a case has been described in which a content type can be referenced by means of a management file, and deletion can be performed, even by a terminal that does not have a terminal ID or application ID corresponding to encrypted content. A case in which a terminal that performs deletion needs to know the terminal ID or application ID of encrypted content will now be described with reference to FIG.17 and FIG.18.

FIG.17 is a drawing showing an example of a terminal A equipped with an ID management function. In this case, terminal A holds the application IDs of application A and application B by means of the ID management function, and continues application ID maintenance and management even after content has been deleted. However, it is assumed that this ID management function does not have a function for decrypting content by means of a held ID. By means of this ID management function, it is possible for terminal A to reference and delete content corresponding to a held and managed ID even after deleting content.

FIG.18 is a drawing showing an example in which the ID management function of terminal A is transferred to another terminal B using the terminal authentication function. Terminal A and terminal B in FIG.18 are both equipped with the above-described ID management function shown in FIG.17, and are also equipped with the same kind of terminal authentication function. In this case, for example, a certain user wishes to make a model change from terminal A to terminal B, and in order to transfer the ID management function of terminal A to terminal B, transfers the IDs of held application A and application B to terminal B after performing terminal authentication with other terminal B. By this means, deletion of content corresponding to application A and application B is made possible for other terminal B.

By transferring the ID management function by means of terminal authentication in this way, it becomes possible for other terminal B to take over referencing and deletion functions for content corresponding to application A and application B for which referencing and deletion were possible with terminal A.

The present application is based on Japanese Patent Application No.2005-311781 filed on October 26, 2005, the entire content of which is expressly incorporated herein by reference.

### Industrial Applicability

The present invention is suitable for use as a data processing apparatus that allows even an application and a terminal that do not know a unique ID used for encryption to delete data (content) stored in a storage medium, or the like.

## Claims

1. A data processing apparatus that performs data write processing and deletion processing for a removable storage medium, comprising:
a management information creating section that creates management information including information of a data storage directory in said storage medium and ID information necessary for data during said data write processing;
a data writing section that stores said management information and said data in a data storage directory in said storage medium during said data write processing; and
a data deleting section that determines a necessity of ID information corresponding to data to be deleted and deletes data stored in said storage medium, and also deletes corresponding management information, during said data deletion processing.

2. The data processing apparatus according to claim 1, wherein said management information creating section acquires a data type and ID information set in said data and creates said management information.

3. The data processing apparatus according to claim 1, wherein:
said management information creating section acquires terminal ID information set in said data as said ID information and creates said management information; and
said data deleting section determines a necessity of terminal ID information corresponding to said data to be deleted and then deletes said data and management information.

4. The data processing apparatus according to claim 1, wherein:
said management information creating section acquires application ID information set in said data as said ID information and creates said management information; and
said data deleting section determines a necessity of application ID information corresponding to said data to be deleted and then deletes said data and management information.

5. The data processing apparatus according to claim 1, further comprising an ID managing section that holds ID information corresponding to said data to be deleted.

## Amended claims

### Amended claims under Art. 19.1 PCT

**1.** (Amended) A data processing apparatus that performs data write processing and deletion processing for a removable storage medium, comprising:
a management information creating section that creates management information that associates information of a data storage directory in said storage medium with ID information that is information related to an ID used in encryption of said data during said data write processing;
a data writing section that stores said management information and said data in a data storage directory in said storage medium during said data write processing; and
a display section that, when an ID of the device itself used when accessing data stored in a data storage directory in said storage medium and an ID of said ID information do not match, displays said ID information instead of said data.

**2.** (Amended) The data processing apparatus according to claim 1, wherein said management information creating section acquires a data type and ID information set in said data and creates said management information.

**3.** (Amended) The data processing apparatus according to claim 1, wherein said management information creating section creates said management information associating terminal ID information that is said ID information set in said data with said data storage directory information.

**4.** (Amended) The data processing apparatus according to claim 1, wherein said management information creating section creates said management information associating application ID information that is said ID information set in said data with said data storage directory information.

**5.** (Deleted)

Statement under Art. 19.1 PCT
Claim 1 has been amended to make it clear that "when an ID of the device itself used when accessing data stored in a data storage directory in the storage medium and an ID of the ID information do not match, the ID information is displayed instead of the data" - that is, when a data processing apparatus that accesses data stored in a storage medium does not know the ID used when the data was encrypted, the data processing apparatus displays ID information instead of the data.

According to Citation 1, it is essential to know the copy-source player ID when performing content deletion.

According to Citation 2, it is essential to know the application identifier when deleting data.

According to the above amendment, the present invention has an effect of enabling a user to judge whether or not to delete data by viewing displayed ID information even if the data processing apparatus does not know the ID used when the data was encrypted.
